Europäisches Patentamt

European Patent Office

Office européen des brevets

(11) Publication number: 0 559 325 A1

# EUROPEAN PATENT APPLICATION

(21) Application number: 93300723.9

(22) Date of filing: 01.02.93

(51) Int. Cl.5: G03B 17/48

(30) Priority: 06.03.92 JP 49710/92

(43) Date of publication of application:
08.09.93 Bulletin 93/36

(84) Designated Contracting States:
DE FR GB

(71) Applicant: PIONEER ELECTRONIC
CORPORATION
No. 4-1, Meguro 1-chome
Meguro-ku Tokyo-to(JP)

(72) Inventor: Ishii, Tsuneo, c/o Pioneer Electronic
Corporation
Tokorozawa Works, No. 2610 Hanazono
4-chome
Tokorozawa-shi, Saitama-ken(JP)

(74) Representative: Brunner, Michael John
GILL JENNINGS & EVERY, Broadgate House,
7 Eldon Street
London EC2M 7LH (GB)

(54) Camera apparatus.

(57) A camera apparatus is provided with: an optical system (2) for receiving and guiding a light for forming an image of an object; a moving picture detection device (31) optically coupled to the optical system, for detecting the guided light and outputting video data corresponding to the detected light; a video data record device (35, 36) coupled to the moving picture detection device, for recording the outputted video data; an optical path alteration device (41, 45) disposed between the optical system and the moving picture detection device for altering an optical path of the guided light; and a photographing device (43) optically coupled to the optical path alteration device, for recording a still picture of the light from the optical path alteration device.

FIG.1

## BACKGROUND OF THE INVENTION

### 1. Field of the Invention

This invention relates to a camera apparatus, and more particularly to a technology for compounding or combining a camera incorporated video tape recorder and a film camera for taking a picture on a photographic film.

### 2. Description of the Related Art

A camera incorporated video tape recorder (hereinafter referred to as a camera incorporated VTR) essentially consists of an optical system having a single lens or a group of lenses and an aperture for forming an image of an object, etc., a VTR recording unit for recording a moving picture onto a video tape, a control unit for controlling the entirety of the VTR, and the like.

More particularly, the VTR recording unit consists of a CCD (Charged Coupled Device) section, a section for recording image data from the CCD section onto a video tape, and the like.

The control unit consists of a controller for outputting various control signals, and an operation input section for carrying out inputting of various data, and/or carrying out various manipulations or operations.

In the camera incorporated VTR thus constructed, an image of a photographic light converged or condensed by the optical system is formed on the CCD section, and such photographic light is then subjected to photoelectric conversion by the CCD section so that a corresponding electric signal is provided. The electric signal thus obtained is outputted as image data from the CCD section, and then undergoes a predetermined signal processing. The image data thus processed is magnetically recorded on the video tape.

While the image formation by the above-described camera incorporated VTR is superior to the image formation by photographing by use of a film camera such as a single lens reflex camera in that a moving picture can be provided, the former is still inferior to the latter in resolution, etc., and the need of the film camera itself is not necessarily lost. Actually, individual uses of the camera incorporated VTR and the film camera are frequently conducted such that the camera incorporated VTR is used for recording of a moving picture in order to record a growth process of a child or memories of a travel, etc., and the film camera is used for recording of a still picture thereof.

In addition, there is a camera incorporated VTR capable of recording a still picture by making use of PCM (Pulse Code Modulation) sound recording tracks provided on a magnetic tape.

However, the above-mentioned camera incorporated VTR has the problems that a television monitor is required for looking at a pictorial image, and that an external equipment such as a video printer, etc. is required for obtaining a hard copy.

Further, in the case where a user carries two cameras of the camera incorporated VTR and the film camera to a photographing place to use the camera incorporated VTR for recording of a moving picture and to use the film camera for recording of a still picture respectively, there is a problem that carrying is inconvenient and troublesome.

## SUMMARY OF THE INVENTION

It is therefore an object of this invention to provide a camera apparatus which has both functions of recording a moving picture and recording a still picture, and which is easy to carry.

According to the present invention, the above mentioned object can be achieved by a camera apparatus provided with: an optical system for receiving and guiding a light for forming an image of an object; a moving picture detection device optically coupled to the optical system, such as a CCD (Charged Coupled Device) for example, for detecting the guided light and outputting video data corresponding to the detected light; a video data record device coupled to the moving picture detection device, for recording the outputted video data; an optical path alteration device disposed between the optical system and the moving picture detection device for altering an optical path of the guided light; and a photographing device optically coupled to the optical path alteration device, for recording a still picture of the light from the optical path alteration device.

In accordance with the present invention, the moving picture detection device, such as a CCD, detects the guided light from the optical system. The video data record device records the video data outputted from the moving picture detection device. Thus, on one hand, the moving picture can be recorded. On the other hand, as the optical path alteration device such as a mirror, etc. is disposed between the optical system and the moving picture detection device, and alters the optical path of the light from the optical system, the photographing device, such as a film camera, records the still picture of the light from the optical path alteration device. Thus, still picture recording by the photographing device, such as a film camera, can be carried out at the same time of moving picture recording by the moving picture detection device and the video data record device, according to the present invention. Further, since the optical system is commonly used for the moving picture detection device and the photographing device, a camera apparatus capable of recording a moving picture and a still picture, and being relatively compact and light to have good portability, can be provided.

In one aspect of the present invention, the optical path alteration device includes an optical element for selectively moving to a first position apart from the optical path so that the optical path is not altered by the optical element, and a second position on the optical path so that the optical path is altered by the optical element to direct the guided light to the photographing device. In this case, a reflection mirror can be employed as such an optical element, which is selectively shifted or rotated to the first and second positions. Thus, substantially whole portion of the guided light can be selectively guided to either one of the moving picture detection device and the photographing device. There may be preferably provided in the camera apparatus, a position control device for controlling the position of the optical element on the basis of a control signal inputted from the external, via for example, an external operation switch.

As the video data record device of the present invention, a device for recording the video data on a recording medium, such as a VTR (Video Tape Recorder), a magnetic disk recorder, an optical disk recorder, a semiconductor recorder etc., can be employed. In this case, it is preferable that the optical path alteration device is adapted to direct the guided light to the photographing device during vertical retrace interval of the video signal recorded on the recording medium, so that the operation of the moving picture detection device is not substantially interfered by the operation of the photographing device.

As the photographing device of the present invention, a device for recording the still picture on a photographic film, such as a film camera, can be employed. In this case, it is preferred that a film detection device for detecting the existence of the photographic film in the photographing device, is provided in the camera apparatus, and that the optical path alteration device is adapted to alter the optical path so as to direct the guided light to the photographing device when the film detection device detects the photographic film, and not to alter the optical path when the film detection device does not detect the photographic film, so that the operation can be made simplified.

In another aspect of the present invention, the optical path alteration device is preferably includes an optical element, fixed on a predetermined position of the optical path, for altering an optical path of one portion of the guided light so as to direct the one portion of the guided light to the photographing device, and not altering an optical path of another portion of the guided light. In this case, a half mirror for partially transmitting the guided light and for partially reflecting the guided light, can be employed as such an optical element. Thus, the construction as for the optical system and the optical path alteration device can be made simplified, compact and light.

The nature, utility, and further features of this invention will be more clearly apparent from the following detailed description with respect to preferred embodiments of the invention when read in conjunction with the accompanying drawings briefly described below.

BRIEF DESCRIPTION OF THE DRAWINGS:

FIG. 1 is a block diagram showing a basic configuration of a first embodiment;
FIG. 2 is a view for explaining the operative position and the non-operative position of the optical path switching mirror of the first embodiment;
FIG. 3 is a view for explaining a second modification of the first embodiment;
FIG. 4 is a block diagram showing a basic configuration of a second embodiment; and
FIG. 5 is a block diagram showing a basic configuration of a third embodiment.

DESCRIPTION OF THE PREFERRED EMBODIMENTS

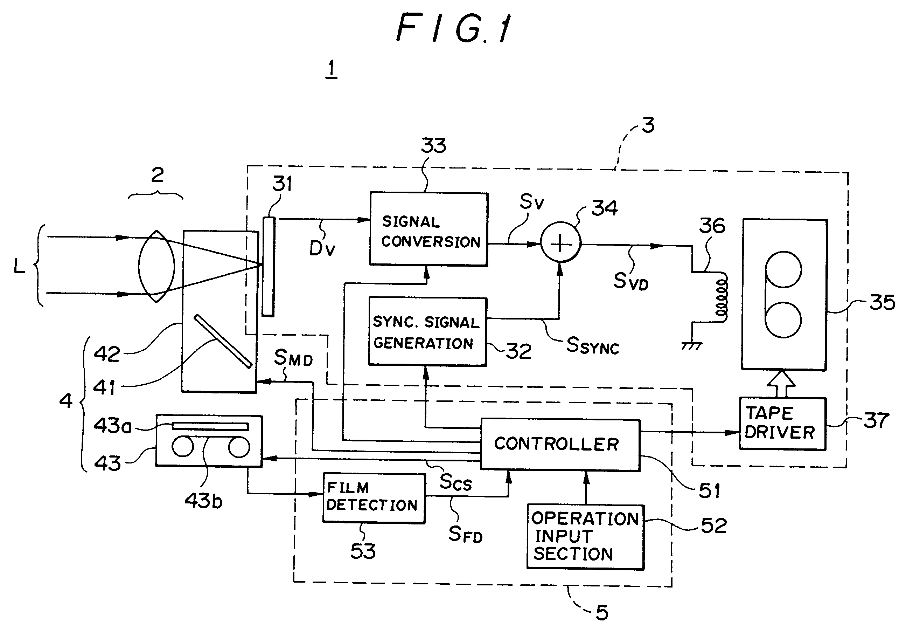

Preferred embodiments of this invention will now be described with reference to FIGS. 1 to 5.

First embodiment

FIG. 1 shows an example of the basic configuration of a first embodiment in a block diagram form.

A camera apparatus 1 includes an optical system 2 having a single lens or a group of lenses and an aperture for forming an image of an object, etc., a VTR recording unit 3 for carrying out a moving picture recording onto a video tape, a film camera unit 4 for carrying out a still picture recording onto a photographic film, and a control unit 5 for controlling the entirety of the camera apparatus 1.

More particularly, the VTR recording unit 3 includes a CCD section 31 for applying photoelectric conversion to an image of an object formed at the light receiving surface thereof to output an electric signal as image data $Dv$, a synchronizing signal generator 32 for generating and outputting a synchronizing signal $S_{SYNC}$, a signal converter 33 for implementing signal processing such as $\gamma$-correction, profile compensation, or white peak compression, etc. to the image data $Dv$ from the CCD section 31 to output a signal thus obtained as a video signal $S_V$ of the NTSC system, etc., an adding section 34 for adding the video signal $S_V$ and the synchronising signal $S_{SYNC}$ to output it as a video signal $S_{VD}$, a magnetic head 36 for applying electromagnetic conversion to the video signal $S_{VD}$ to record it onto a video tape 35, and a tape driver 37 for driving the video tape 35.

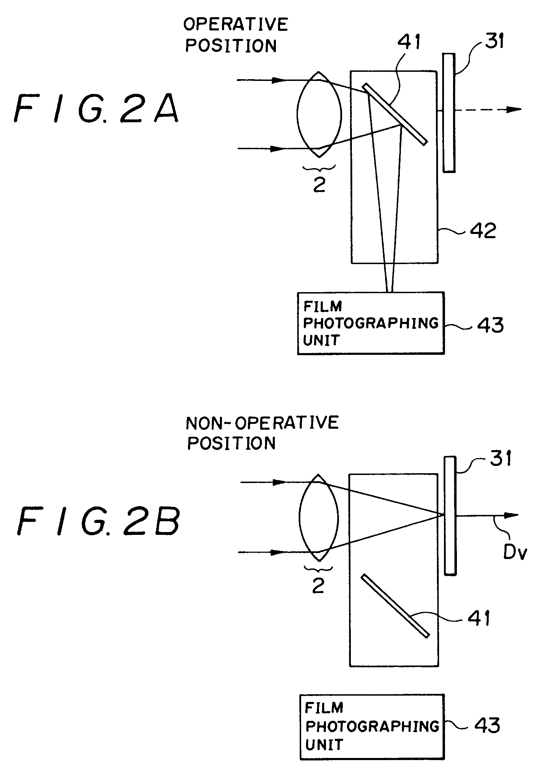

The film camera unit 4 includes an optical path switching mirror 41 for selectively changing or altering an optical path of an image forming light from the optical system 2, a mirror diver 42 for driving the optical path switching mirror 41 so that it is located at a non-operative position i.e. a stored position (see FIG. 2B) or at an operative position (see FIG. 2A), and a film photographing unit 43 including a shutter section 43a for carrying out a shutter operation on the basis of a shutter control signal S from the control unit 5, and adapted for carrying out winding/rewinding operation of a photographic film 43b loaded therein, or the like.

The control unit 5 includes a controller 51 for outputting various control signals, an operation input section 52 for carrying out inputting of various data, or carrying out various operations, a film detector 53 for detecting presence or absence of the photographic film 43b to output a film detection signal.

The operation of the camera apparatus of the first embodiment will now be described in connection with the case where a moving picture is taken by VTR and the case where a still picture is taken by the film camera unit 4, rejection. In this case, it is assumed that there are a VTR mode in which a moving picture is taken by the VTR and a photographing mode in which a still picture is taken by the film camera unit, and that a user selects either mode through the operation input section 52.

a) At the time of taking a moving picture by VTR (VTR mode)

When the VTR mode is selected through the operation input section 52, the controller 51 outputs a mirror drive control signal SMD to the mirror driver 42. Thus, the optical path switching mirror 41 is driven by the mirror driver 42 so that it is located at the non-operative position (see FIG. 2B). As a result, an image of an image forming light L converged by the optical system 2 is formed on the CCD section 31. This light signal is subjected to photoelectric conversion by the CCD section 31 and is outputted as image data $D_V$. Further, this image data $D_V$ undergoes signal processing such as $\gamma$-correction, profile compensation, or white peak compression, etc. by the signal converter 33. The signal thus processed is outputted as a video signal $S_V$ to the adding section 34. Simultaneously with this, the synchronizing signal generator 32 generates a synchronising signal $S_{SYNC}$ to output it to the adding section 34. The adding section 34 adds the synchronizing signal $S_{SYNC}$ to the video signal $S_V$ to output the added signal thus obtained as a resultant video signal $S_{VD}$ of the NTSC system, etc. to the magnetic head 36. As a result, the magnetic head 36 carries out a magnetic recording corresponding to the resultant video signal $S_{VD}$ onto the video tape 35 driven by the tape driver 37.

Thus, a moving picture is recorded onto the video tape 35.

b) At the time of photographing (photographic mode)

When the photographic mode is selected through the operation input section 52, the controller 51 confirms that a film detection signal $S_{FD}$ from the film detector 52 indicates the film presence to output a mirror drive control signal $S_{MD}$ to the mirror driver 42. Thus, the optical path switching mirror 41 is driven so that it is located at the operative position. As a result, the image forming light converged by the optical system 2 is guided to the film camera unit 4 side. Thereafter, when a shutter control signal $S_{CS}$ is outputted from the controller 51, the shutter section 43a places a shutter in an open state at a predetermined shutter speed. As a result, an image of an object is formed on the photographic film 43b. After photographing, the shutter is placed in a closed state again by the shutter control signal $S_{CS}$, and the photographic film 43b is wound by a film winding mechanism.

Thus, a still picture is taken on the photographic film 43b.

It is to be noted that in the case where the film detection signal $S_{FD}$ indicates the film absence, the controller 51 is constructed to conduct a control such that no photographic mode results to be set.

Since the camera apparatus of this embodiment is constructed as above, a single camera equipment can be used as the camera incorporated VTR or the film camera just by switching its operational mode by a simple operation. Further, since the optical system 2 is commonly used for the camera incorporated VTR and the film camera, a camera apparatus capable of recording a moving picture and a still picture, and being relatively compact and light to have good portability, can be provided.

First modification of the first embodiment

While, in the above-described first embodiment, there is employed a configuration such that a user can arbitrarily carry out switching between the VTR mode and the photographic mode, there may be employed a configuration such that when it is detected by the film detection signal $S_{FD}$ that no photographic film is loaded, the VTR mode is always selected, while when it is detected that no photographic film 43b is loaded, the operational mode shifts to the photographic mode at all times.

By employing such a configuration, control of the controller 51 can be simplified.

Second modification of the first embodiment

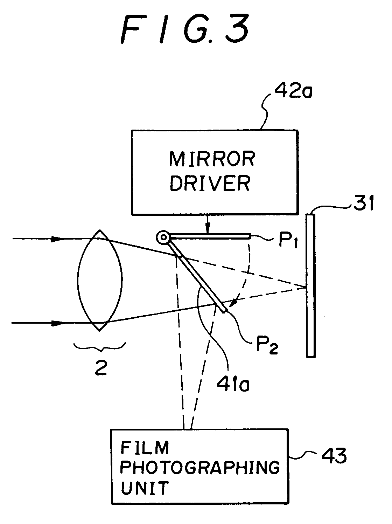

While, in the above-described first embodiment, there is employed the system of driving the optical path switching mirror 41 by the mirror driver 42 so that it is shifted in upper and lower directions in the figure, there may be employed a configuration of the rotating system as shown in Fig. 3. Namely, in the VTR mode, the optical path switching mirror 41a is placed in the state $(P_1)$, by rotating in an upper direction in the figure by the mirror driver 42a. In the photographic mode, the optical path switching mirror 41a is placed in the state $(P_2)$ by rotating in a lower direction in the figure by the mirror driver 42a.

By employing such a configuration, an operation space required for the drive operation of the optical path switching mirror 41 can be reduced. Thus, the camera apparatus can be further miniaturized.

Second embodiment

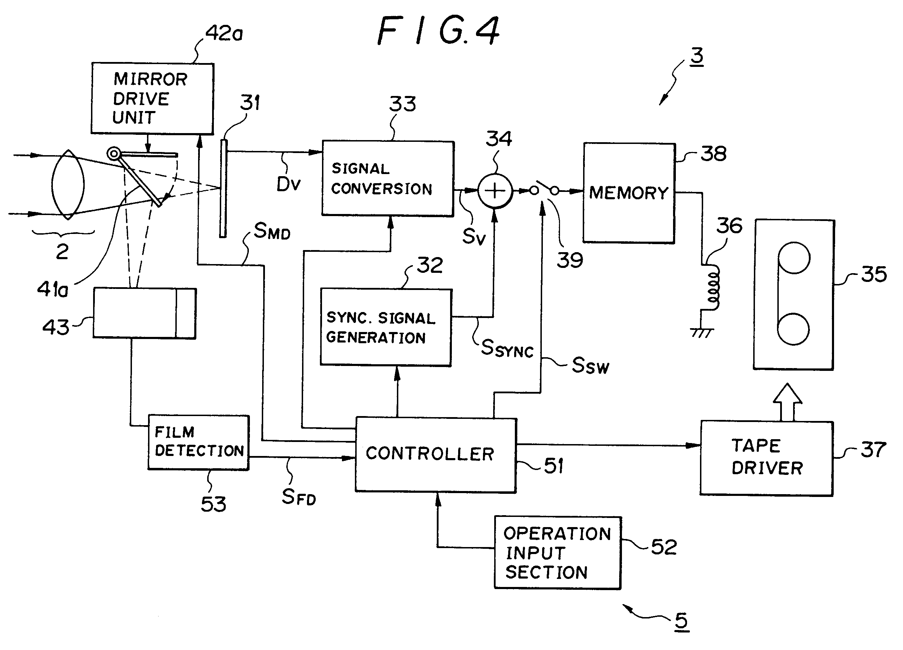

A second embodiment of this invention will now be described with reference to FIG. 4. In FIG. 4, the same elements as those in FIG. 1, carry the same reference numerals and the explanations thereof are omitted.

In FIG.4, the second embodiment differs from the first embodiment in that there is provided a memory section 38 including a field memory or a frame memory, an A/D converter and a D/A converter for once converting the video signal $S_{VD}$ to digital data to temporarily store such digital data thereafter to convert it to the video signal $S_{VD}$ again to output it to the magnetic head 36. There is also provided an input switch 39 for selecting whether or not the video signal $S_{VD}$ recorded in this memory section should be updated between the adding section 34 and the magnetic head 36. Thus, imaging by VTR and photographing by the film camera unit can be seemingly carried out substantially at the same time.

Generally, as the shutter speed of the film camera such as a single-lens reflex camera, etc., the value of 1/10 ~ 1/1000 seconds is frequently used.

Meanwhile, since the vertical retrace interval VRI is generally 6% of the vertical effective image, it is substantially expressed as the following expression in the case of the NTSC system:

VRI = 1/60 x 0.06
= 1 (m sec)
(= shutter speed of 1/1000)

Accordingly, if the optical path switching mirror is driven during such vertical retrace interval VRI to carry out photographing, photographing can be carried out at a shutter speed more than 1/1000 seconds. However, in the case of a shutter speed more than 1/1000 seconds, although depending upon nature or performance of the lens system, photographing can be carried out only in the state where an object itself is in a relatively bright state.

In view of this, there is employed a configuration to once convert a video signal $S_{VD}$ sent from the adding section 34 to digital data by means of the A/D converter in the memory section 38, to temporarily store it into the field memory (or frame memory) in the memory section 38, and to convert the digital data stored in the field memory (or frame memory) to a video signal $S_{VD}$ again by means of the D/A converter in the memory section 38 until photographing is completed to output it, so as to make recording onto the video tape 35 on the basis of the outputted video signal $S_{VD}$.

Thus, photographing can be carried out at an arbitrary shutter speed. In more actual terms, in the case where the shutter speed is 1/60 seconds, the input switch 39 is cut OFF by a switch control signal $S_{SW}$ from the controller 51 during photographing, i.e., for 1/60 seconds so that data in the field memory (or frame memory) is not updated. On the other hand, the magnetic head 36 reads out data in an earlier field (or earlier frame) recorded in the field memory (or frame memory) to thereby carry out recording onto the video tape 35. In this case, data in the same field or data in the same frame is recorded twice or more. However, this is no problem from a practical point of view.

By employing such a circuit configuration, imaging by VTR and photographing by the film camera unit can be carried out seemingly substantially at the same time.

Modification of the Second Embodiment

While the camera apparatus of the above-described second embodiment is constructed so that it can cope with various shutter speeds, there may be employed a configuration without provision of a memory such as field memory or frame memory, and an input selector switch, if this camera apparatus is only required to cope with a shutter speed higher than 1/1000 seconds.

An employment of the above-described configuration can simplify the configuration of the camera apparatus, thus to reduce the cost of the apparatus.

Third Embodiment

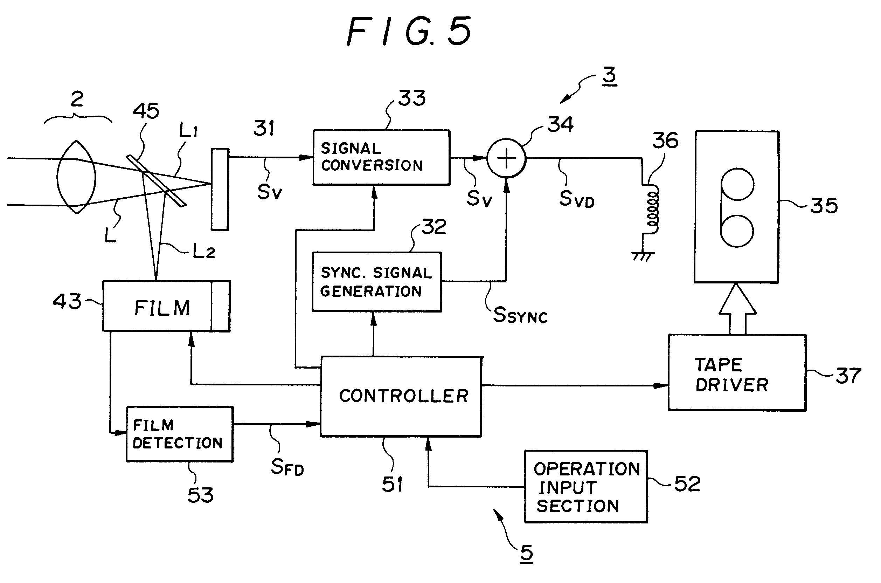

A third embodiment of this invention will now be described with reference to FIG. 5. In FIG. 5, the same elements as those in FIG. 1, carry the same reference numerals, and the explanations thereof are omitted.

In FIG. 5, the third embodiment differs from the above-described first embodiment in that a half-mirror 45 for branching an optical path is provided in place of the optical path switching mirror and the mirror driver so that imaging by VTR and photographing by the film camera unit can be carried out independently, i.e., at the same time.

The sum total of a light quantity of a transmitted light $L_1$ and a light quantity of a reflected light $L_2$ of the half-mirror 45 becomes equal to a value less than of a light quantity of an input light L because of loss in the half-mirror 45. If branching is carried out at a ratio of one to one, the quantity of a transmitted light and the quantity of a reflected light become about 50% of the quantity of an incident light, respectively. Accordingly, in the case of this configuration, since the luminance of an image picked up is decreased, it is necessary to use a high sensitivity CCD as CCD section 31 on the VTR recording section 3 side. Further, it is necessary to slightly decrease the shutter speed at the film camera unit 4. In addition, it is necessary to increase the aperture as the entirety of the device.

By employing such a configuration, imaging by VTR and photographing by the film camera unit can be carried out exactly at the same time.

While VTR is used as a motion picture recorder in the above-described embodiments, a magnetic disk recorder, an optical disk recorder, a semiconductor recorder, or the like may be used as the motion picture recorder.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

**Claims**

1. A camera apparatus, characterized in that said apparatus comprises:

   an optical system (2) for receiving and guiding a light for forming an image of an object;

   a moving picture detection means (31) optically coupled to said optical system, for detecting the guided light and outputting video data corresponding to the detected light;

   a video data record means (35, 36) coupled to said moving picture detection means, for recording the outputted video data;

   an optical path alteration means (41, 45) disposed between said optical system and said moving picture detection means for altering an optical path of the guided light; and

   a photographing means (43) optically coupled to said optical path alteration means, for recording a still picture of the light from said optical path alteration means.

2. A camera apparatus as set forth in claim 1, characterized in that said optical path alteration means (41) comprises an optical element for selectively moving to a first position apart from the optical path so that the optical path is not altered by said optical element, and a second position on the optical path so that the optical path is altered by said optical element to direct the guided light to said photographing means.

3. A camera apparatus as set forth in claim 2, characterized in that said optical element (41) comprises a mirror which is selectively shifted to the first and second positions.

4. A camera apparatus as set forth in claim 2, characterized in that said optical element (41) comprises a mirror (41a) which is selectively rotated to the first and second positions.

5. A camera apparatus as set forth in claim 2, characterized in that said apparatus further comprises position control means (42) for controlling the position of said optical element (41) on the basis of a control signal inputted from the external.

6. A camera apparatus as set forth in any one of claims 1 to 5, characterized in that said moving picture detection means (31) comprises a CCD (Charged Coupled Device).

7. A camera apparatus as set forth in any one of claims 1 to 6, characterized in that said video data record means (35, 36) comprises means for recording the video data on a recording medium (35).

8. A camera apparatus as set forth in claim 7, characterized in that said optical path alteration means (41) is adapted to direct the guided light to the photographing means during vertical retrace interval of the video signal recorded on said recording medium (35).

9. A camera apparatus as set forth in any one of claims 1 to 8, characterized in that said photographing means (43) comprises means for recording the still picture on a photographic film (43b).

10. A camera apparatus as set forth in claim 9, characterized in that said apparatus further comprises a film detection means (53) for detecting the existence of the photographic film (43b) in the photographing means (43), said optical path alteration means (41) being adapted to alter the optical path so as to direct the guided light to said photographing means when the film detection means detects the photographic film, and not to alter the optical path when the film detection means does not detect the photographic film.

11. A camera apparatus as set forth in any one of claims 6 to 10, characterized in that said optical path alteration means (41, 45) comprises an optical element (45), fixed on a predetermined position of the optical path, for altering an optical path of one portion of the guided light so as to direct said one portion of the guided light to said photographing means (43), and not altering an optical path of another portion of the guided light.

12. A camera apparatus according to claim 11, characterized in that said optical element (45) comprises a half mirror for partially transmitting the guided light and for partially reflecting the guided light.

13. A camera apparatus as set forth in any one of claims 1 to 12, characterized in that said apparatus further comprises memory means (38) disposed between said moving picture detection means (31) and said video data record means (35, 36), for temporarily storing the video data and outputting it to said video data record means.

# FIG.1

OPERATIVE
POSITION

*F I G. 2A*

FILM
PHOTOGRAPHING
UNIT

NON-OPERATIVE
POSITION

*F I G. 2B*

FILM
PHOTOGRAPHING
UNIT

# F I G. 3

MIRROR DRIVER 42a

31

P₁

P₂

41a

2

FILM PHOTOGRAPHING UNIT 43

10

# F I G. 4

EP 0 559 325 A1

# F I G. 5

EP 0 559 325 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 233 736 (SONY CORPORATION) | 1-7,9, 11-13 | G03B17/48 |
| A | * column 1, paragraph 1; figure 1 *<br>* column 2, line 42 - line 58; claims 1,2,5,8 *<br>* column 5, paragraph 2 -paragraph 4 *<br>* column 6, line 52 *<br>--- | 8 | |
| A | EP-A-0 418 048 (SAMUELSON GROUP)<br><br>* column 6, paragraph 4 -paragraph 5; figure 2 *<br><br>----- | 1-3,7, 11,12 | |

TECHNICAL FIELDS
SEARCHED (Int. Cl.5)

G03B
H04N

The present search report has been drawn up for all claims

| Place of search | Date of completion of the search | Examiner |
|---|---|---|
| THE HAGUE | 04 JUNE 1993 | ROMEO V.L. |

EPO FORM 1503 03.82 (P0401)